# FASCICULE DE BREVET EUROPEEN

(11) **EP 3 240 763 B1**
(45) Date de publication et mention de la délivrance du brevet: **26.09.2018**
(21) Numéro de dépôt: 15830821.3
(22) Date de dépôt: 21.12.2015
(51) Int. Cl.: C03B 33/033, C03B 33/04

(54) **PROCÉDÉ DE ROMPAGE D'UNE FORME INTÉRIEURE DANS UNE FEUILLE DE VERRE ET APPAREIL ASSOCIÉ**
VERFAHREN ZUM BRECHEN EINER INNEREN FORM AUS EINER GLASSCHEIBE UND DAZU GEHÖRENDER VORRICHTUNG
METHOD FOR BREAKING AN INNER SHAPE OUT OF A GLASS SHEET AND ASSOCIATED APPARATUS

(30) Priorité: 31.12.2014 FR 1463467
(43) Date de publication de la demande: 08.11.2017
(73) Titulaire: Saint-Gobain Glass France, 92400 Courbevoie (FR)
(72) Inventeur: DUMENIL, Thierry, 60280 Margny les Compiegne (FR)
(74) Mandataire: Saint-Gobain Recherche
(86) Numéro de dépôt international: PCT/FR2015/053686
(87) Numéro de publication internationale: WO 2016/108007

(56) Documents cités:
- EP-A1- 1 842 833
- JP-A- H07 223 828
- JP-A- 2001 002 438
- US-B1- 6 829 910

## Description

La présente invention est relative au domaine du rompage d'une forme intérieure dans une feuille de verre, par exemple en vue de former un toit ouvrant dans un vitrage de véhicule automobile formant toit ou par exemple encore une ouverture vitrée pivotante à l'intérieur d'un vitrage latéral de véhicule automobile, comme sur certaines portes coulissantes.

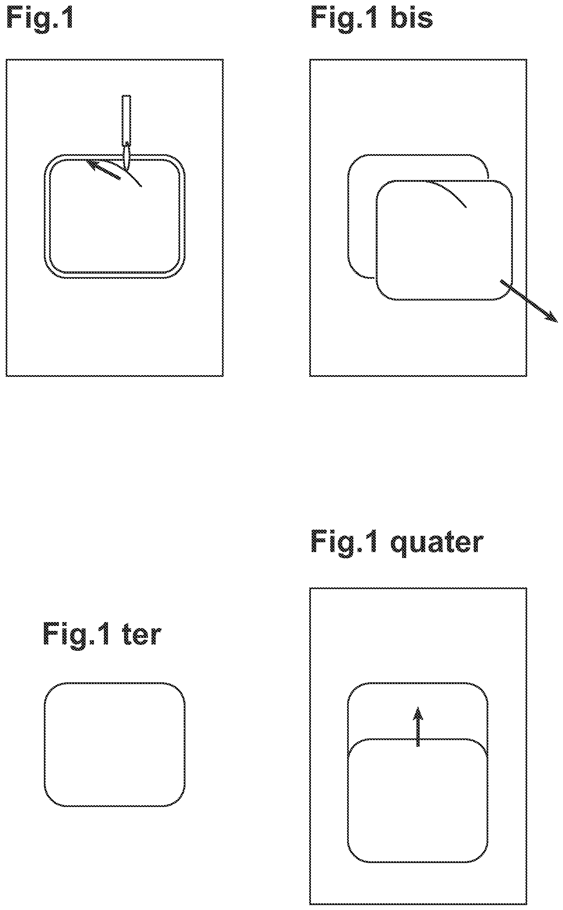

Une première technique connue consiste à découper la forme intérieure au moyen d'un jet d'eau (figure 1). Le jet d'eau réalise une découpe par enlèvement de matière entre la forme intérieure et la forme principale, ce qui permet une séparation aisée (figure 1 bis). Néanmoins, la forme intérieure ne peut être réutilisée car pour être de bonne qualité, la découpe doit commencer à l'intérieur de la forme intérieure (figure 1).

La forme intérieure doit être découpée à partir d'une autre feuille de verre (figure 1 ter) dans laquelle les bords auront été rompus, avant assemblage des deux formes complémentaires (figure 1 quater).

Un inconvénient de ce procédé est que la forme intérieure doit être détruite. En outre, le procédé de découpe par jet d'eau est lent.

Un autre procédé plus rapide consiste à utiliser une découpe avec rompage.

Deux opérations se succèdent :
- une opération préalable de traçage d'une ou plusieurs fissures superficielles à la surface du verre à l'aide, par exemple, d'une molette de verrier ou d'un laser ; ces fissures forment des lignes aux contours de la forme ; cette opération s'appelle l'opération de «découpe» ;
- une opération de propagation de la fissure superficielle initiale à travers l'épaisseur de la feuille de verre ; cette opération s'appelle l'opération de «rompage» et permet de séparer la forme que l'on veut découper de l'échantillon de verre initial, appelé primitif.

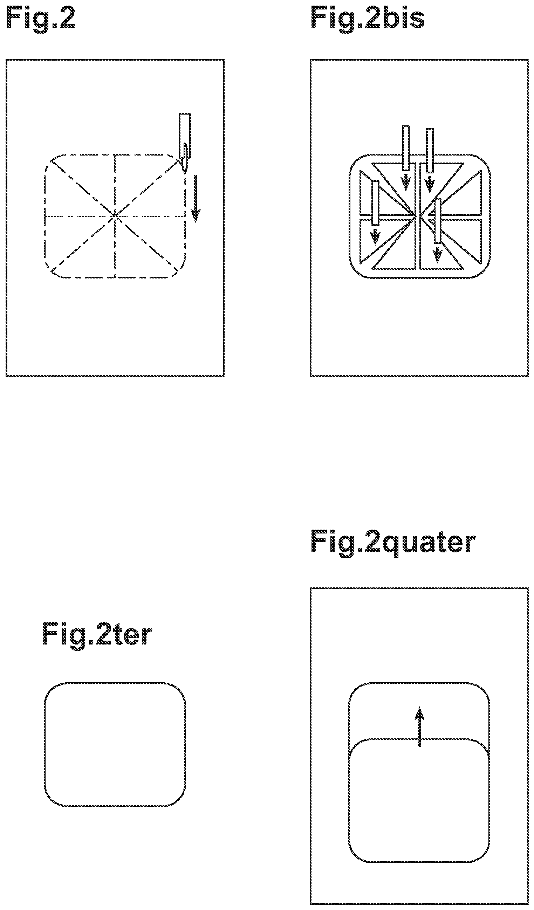

Les figures 2 et 2 bis illustrent la découpe par traçage puis appui sur la partie centrale sacrificielle pour rompage. Des traits additionnels de découpe (figure 2) sont alors de préférence prévus pour faciliter le rompage des différents morceaux de la partie centrale.

Mais cette technique a également pour inconvénient de détruire la forme intérieure. Il faut découper et façonner une forme intérieure (figure 2 ter) à partir d'une autre feuille de verre, et d'assembler *in fine* les deux formes complémentaires (figure 1 quater).

Un autre exemple de procédé de découpe d'une feuille de verre est connu du document JP 2001 002438.

Un but de l'invention est de faciliter la découpe d'une forme intérieure dans une feuille de verre.

A cet effet, un objet de l'invention est un procédé de rompage d'une forme intérieure dans une feuille de verre destinée à former un vitrage, comprenant :
- une étape de traçage à la surface du verre au moyen d'un outil de découpe, d'un trait de découpe délimitant le contour externe de ladite forme intérieure et le contour interne d'une forme périphérique ;
- une mise en contact de la forme périphérique de la feuille de verre avec un moyen d'appui le long du contour externe de la forme intérieure ;
- l'utilisation d'un moyen de déformation pour déformer l'une de la forme intérieure et de la forme périphérique en flexion convexe vers le côté opposé au trait de découpe, la déformation différentielle entre la forme intérieure et la forme périphérique étant suffisante pour rompre la forme intérieure le long du trait de découpe et créer la distance nécessaire à l'extraction sans contact de la forme intérieure par rapport à la forme périphérique, l'extraction étant réalisée avec un maintien en flexion convexe.

Ce procédé permet de conserver la forme intérieure et de l'utiliser comme ouvrant de forme complémentaire de la fenêtre réalisée dans la feuille de verre. Ceci réduit le coût de fabrication.

En outre, le procédé est rapide.

Cette technique de rompage a également pour avantage de pouvoir être intégrée sur une ligne existante.

Suivant des modes particuliers de réalisation, le procédé présente en outre l'une ou plusieurs des caractéristiques suivantes, prise(s) seule(s) ou suivant toutes les combinaisons techniquement possibles :
- le procédé utilise un moyen de maintien contrant l'effet du moyen de déformation dans l'autre de la forme intérieure et de la forme périphérique ;
- le moyen d'appui s'étend sur tout le contour externe de la forme intérieure, à l'intérieur, en regard ou à l'extérieur par rapport au trait de découpe ;
- le moyen d'appui comprend deux organes d'appui, de préférence l'un autour de l'autre ;
- le moyen d'appui comprend au moins un joint pour former au moins une zone de faible pression en regard de l'une au moins de la forme intérieure et de la forme extérieure ;
- une zone de faible pression est une zone de déformation en flexion convexe de ladite une de la forme intérieure et de la forme périphérique, le moyen de déformation étant un moyen d'aspiration ;
- une zone de faible pression est une zone de maintien contrant la déformation de ladite autre de la forme intérieure et de la forme périphérique, le moyen de maintien étant un moyen d'aspiration ;
- le moyen d'appui est adapté pour servir d'appui à ladite autre de la forme intérieure et de la forme périphérique pendant le rompage de la forme intérieure ;
- le moyen de déformation est ou comprend une contre-forme convexe adaptée pour presser ladite une de la forme intérieure et de la forme périphérique en flexion convexe ;

L'invention a encore pour objet une machine de rompage d'une forme intérieure dans une feuille de verre destinée à former un vitrage, comprenant:
- un outil de découpe et des moyens de déplacement automatique dudit outil pour réaliser un trait de découpe délimitant le contour externe de ladite forme intérieure et le contour interne d'une forme périphérique ;
- un moyen d'appui pour appuyer sur la feuille de verre le long du contour externe de la forme intérieure ; et
- un moyen de déformation pour déformer l'une de la forme intérieure et de la forme périphérique en flexion convexe vers le côté opposé au trait de découpe, et réaliser l'extraction de la forme intérieure par rapport à la forme périphérique avec un maintien en flexion convexe de ladite une de la forme intérieure et de la forme périphérique, avec le moyen de déformation et/ou un autre moyen de maintien en flexion convexe.

L'invention sera mieux comprise à la lecture de la description qui va suivre, faire uniquement à titre d'exemple non limitatif, en se référant aux figures suivantes :
- les figures 1 à 1 quater sont des vues schématiques de dessus d'un procédé de fabrication utilisant la découpe par jet d'eau, selon l'art antérieur ;
- les figures 2 à 2 quater sont des vues analogues aux figures 1 illustrant une autre technique d'extraction d'une forme intérieure selon l'art antérieur, par découpe et rompage ;
- les figures 3 à 5 sont des vues schématiques en coupe verticale de différentes étapes d'un procédé selon un mode particulier de réalisation de l'invention ;
- les figures 6 - 6 quater, 7 - 7 quater, 8 - 8 quater sont également des vues schématiques en coupe verticale des étapes réalisées lors de trois procédés de rompage différents d'une premier mode de réalisation et les figures 9 - 9 quater des figures analogues un exemple d'un deuxième mode de réalisation.

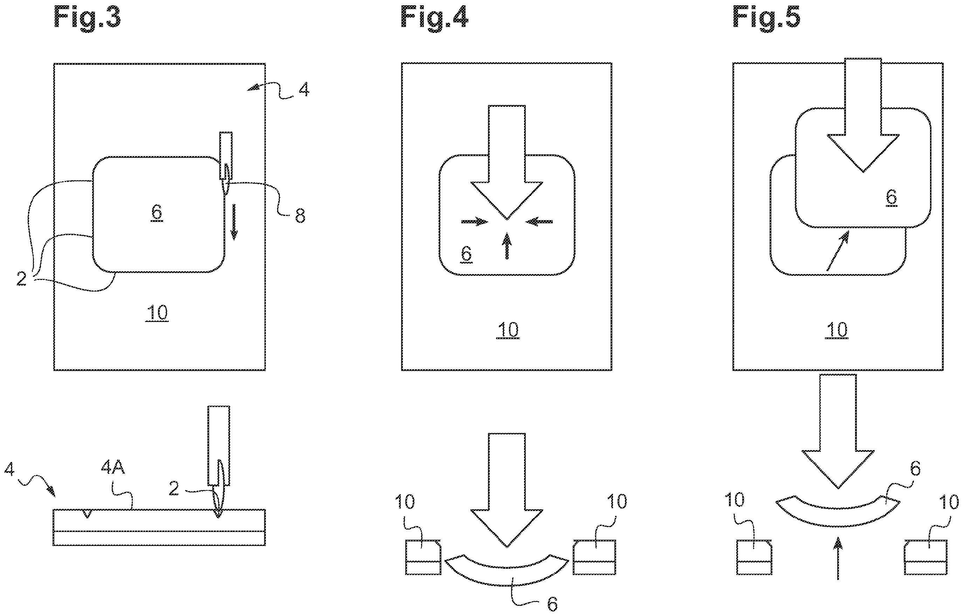

Les Figures 3 à 5 illustrent schématiquement un procédé selon un mode particulier de réalisation de l'invention, consistant d'abord en une étape de traçage d'un trait 2 (ou « ligne ») de découpe (figure 3), c'est-à-dire de création d'une fissure sur une première face 4A de la feuille de verre 4, suivie d'une étape de rompage par mise en flexion convexe de la forme intérieure.

A noter qu'on entend, dans tout le texte, par « forme intérieure », une forme dont le contour est une ligne fermée et à l'intérieur par rapport au contour périphérique de la feuille de verre.

A noter également que la feuille de verre à découper est typiquement un « primitif ». Pour produire un primitif, on procède généralement dans un premier temps à la découpe dans des PLF ou DLF, de feuilles de verre de forme rectangulaire ou trapézoïdale, qui sont appelés « primitifs ». Il s'agit de feuilles de verre dont la forme est un polygone convexe contenant le vitrage définitif à réaliser tout en laissant sur tout le pourtour un « trim » suffisant pour procéder au rompage éventuel des bords. En variante, il s'agit d'une feuille de verre prête à façonner, i.e. dont la forme correspond sensiblement à la forme définitive du vitrage. Il s'agit cependant, d'une manière générale, d'une feuille de verre de tout type adapté, même s'il s'agit de préférence d'une feuille de verre plate.

A noter également que les PLF et DLF sont les feuilles de verre obtenues sur la ligne de fabrication d'un ruban de verre flotté.

Le traçage du trait de découpe est par exemple réalisé au moyen d'une molette de verrier 8 ou de tout autre instrument de découpe adapté, tel que par exemple un laser. Le trait de découpe 2 est une fissure destinée à permettre le rompage suivant ce trait lors de l'étape de rompage. Il s'agit donc d'une découpe partielle, i.e. seulement sur une partie de l'épaisseur de la feuille de verre. C'est ce qu'on entend par « trait de découpe » dans tout le texte.

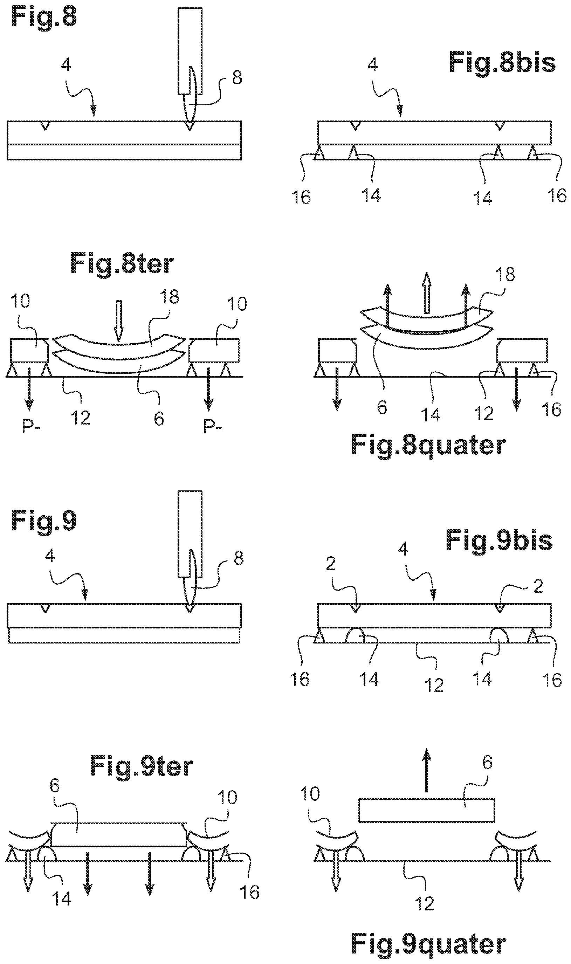

Les figures 4 et 5 illustrent le principe de l'invention, à savoir rompre la feuille de verre le long du trait de découpe 4 par mise en flexion convexe de la forme intérieure 6 (ou alternativement de la forme périphérique 10 comme illustré sur les figures 9 - 9quater et expliqué plus loin). Cette mise en flexion convexe est réalisée vers le côté opposé au côté du trait de découpe 4, i.e. vers le bas sur les figures.

La forme périphérique10 est quant à elle maintenue dans son état initial, sa déformation en flexion étant empêchée (ou seulement limitée) par un moyen de maintien adapté, tel qu'un moyen d'aspiration, associé à un moyen d'appui portant la forme périphérique, comme expliqué plus en détail ci-dessous.

La mise en flexion différentielle de la forme intérieure 6 par rapport à la forme extérieure 10, simultanément sur l'ensemble du contour de la forme intérieure, réalise le rompage et permet d'éloigner les bords de la forme intérieure du contour interne de la forme périphérique, ce qui facilite l'extraction de la forme intérieure.

L'extraction de la forme intérieure 6 est par exemple réalisée dans une direction opposée à celle de la mise en flexion, comme illustré par la figure 5 sur laquelle l'extraction est réalisée vers le haut. Il s'agit en variante d'une extraction de tout type adapté, dans la mesure où la forme mise en flexion est maintenue en flexion pendant l'extraction.

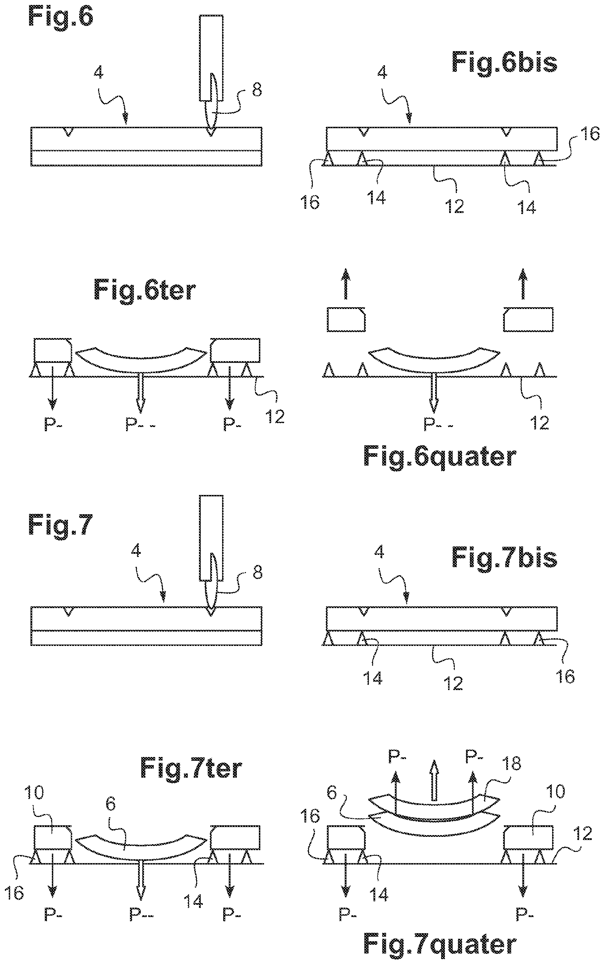

Les figures 6 - 6 quater, 7 - 7 quater, 8 - 8 quater illustrent plus précisément trois modes de mise en oeuvre de l'invention, fournis à titre d'exemple, et selon un premier mode de réalisation dans lequel la forme intérieure 6 est mise en flexion. Selon un deuxième mode de réalisation qui sera expliqué en référence aux figures 9-9quater, c'est la forme périphérique 10 qui est mise en flexion.

Dans l'exemple des figures 6-6quater, tout comme dans tous les autres exemples des figures 7 - 9quater, un trait de découpe est tracé le long du contour de la forme intérieure, sur un premier poste de découpe. La feuille de verre est disposée à cet effet sur un tapis de type feutre ou de tout autre type adapté.

La feuille de verre est ensuite transférée par tout moyen adapté vers un poste de rompage, plus particulièrement sur une table de support 12 formant moyen d'appui pour la feuille de verre.

Dans les trois exemples des figures 6-8quater, la table est pourvue de joints 14, 16 d'appui étanche agencés l'un autour de l'autre. Un premier joint 14 est prévu pour être, après mise en place de la feuille de verre, le long et autour du trait de découpe, à l'extérieur par rapport au trait de découpe. Le joint externe 16 est quant à lui prévu le long et à l'intérieur par rapport au contour externe de la forme périphérique 10.

En variante cependant, notamment comme illustré par l'exemple des figures 9-9quater, le joint interne 14 est prévu en regard du trait de découpe 2 et suffisamment épais pour être en contact étanche avec la forme intérieure 6 et avec la forme périphérique 10. Il s'agit d'une variante applicable également aux exemples des figures 6-8ter.

Le joint interne 14 permet de créer une zone de faible pression (P^{- -}) entre la forme périphérique 10 et la table de support 12, agissant ainsi comme moyen de mise en flexion convexe (voir figure 6 ter). Un dispositif d'aspiration est par exemple intégré à la table de support à cet effet (non représenté).

Grâce à la présente supplémentaire du joint externe 16, un vide partiel (P⁻) peut être créé dans la zone en regard de la forme périphérique 10, de façon à maintenir la forme périphérique à plat, i.e. de former un moyen de maintien contrant la déformation en flexion par le moyen de déformation appliqué à la forme intérieure 6. Un dispositif d'aspiration (non représenté) est également intégré à la table de support 12 à cet effet.

Le joint externe est cependant optionnel dans l'hypothèse où le maintien de la forme périphérique 10 serait effectué de façon mécanique, par exemple en appliquant une contre-forme plate sur la forme périphérique (variante non représentée).

A noter également qu'en variante non représentée, n'est pas prévu un moyen de maintien à plat à l'encontre de la déformation en flexion convexe, notamment dans l'hypothèse où la forme périphérique serait de grande taille et l'effet de la gravité sur la forme périphérique (ou l'effet de la gravité sur la forme intérieure dans le deuxième mode de réalisation) suffisant pour obtenir la déformation différentielle recherchée entre la forme intérieure 6 et la forme périphérique 10.

Sur la figure 6 quater, la forme intérieure 6 est maintenue en flexion sans bouger pendant que la forme périphérique 10 est retirée, par exemple par une table aspirante ou un autre moyen de tout type adapté comme un moyen mécanique.

Dans le deuxième exemple des figures 7 à 7 quater, le rompage est réalisé de la même façon que dans le premier exemple des figures 6- 6quater, mais l'extraction est réalisée par retrait de la forme intérieure 6 au moyen d'une table aspirante adaptée pour maintenir la forme intérieure 6 en flexion pendant l'extraction. On conçoit ainsi que le moyen de déformation en flexion convexe n'est pas nécessairement le même que le moyen de maintien en flexion convexe lors de l'extraction. Dans ce cas précis, le moyen de déformation en flexion convexe pour rompage est formé par les joints d'appui 14, 16 et un dispositif d'aspiration associé tandis que le moyen de maintien en flexion convexe est formée par une table aspirante prévue du côté opposé de la feuille de verre, et possédant de préférence une contre-forme convexe 18 correspondant à la forme intérieure en flexion convexe.

Le maintien à plat de la forme périphérique à plat est toujours réalisé par aspiration.

Dans le troisième exemple des figures 8 à 8quater, la mise en flexion est réalisée non pas par aspiration mais par appui mécanique d'une contre-forme spécifique 18. La contre-forme 18 a une forme correspondant à la forme convexe souhaitée pour le rompage, i.e. une forme convexe adaptée.

L'extraction a ensuite lieu par aspiration de la forme intérieure sur la contre-forme convexe 18 ayant servi au rompage, formant ainsi moyen de maintien en flexion.

Dans le deuxième mode de réalisation illustré par les figures 9-9quater, le forme intérieure est maintenue à plat tandis que la forme périphérique est déformée en flexion convexe vers le côté opposé au trait de découpe 2.

Dans cet exemple, le moyen de déformation pour rompage est un moyen d'aspiration, la table de support 12 formant entre les deux joints 14, 16 une zone de faible pression suffisante pour déformer la forme périphérique 10. La forme intérieure 6 est quant à elle soumise à une zone de faible pression suffisante pour son maintien à l'encontre de la déformation en flexion.

L'extraction de la forme intérieure est réalisée par exemple par une table aspirante, pendant que la forme périphérique 10 est maintenue en flexion convexe par aspiration.

A noter qu'en variante, dans les deux modes de réalisation, la mise en flexion pourrait se faire vers le haut, par exemple si la feuille de verre était maintenue en l'air par aspiration. Le trait de découpe 2 serait dans ce cas du côté sous la feuille de verre.

La machine illustrée schématiquement sur les figures 6 à 9 quater possède au moins un calculateur et une mémoire sur laquelle sont stockés des programmes de commande de la machine. Les programmes sont aptes à commander les machines des figures 6 à 9 quater, plus particulièrement à commander l'outil de découpe 6, le moyen de déformation en flexion, de maintien à plat et d'extraction.

## Revendications

1. Procédé de rompage d'une forme intérieure (6) dans une feuille de verre (4) destinée à former un vitrage, comprenant :
- une étape de traçage à la surface du verre au moyen d'un outil de découpe (8), d'un trait de découpe (2) délimitant le contour externe de ladite forme intérieure (6) et le contour interne d'une forme périphérique (10) ;
- une mise en contact de la forme périphérique (10) de la feuille de verre (4) avec un moyen d'appui (14, 16) le long du contour externe de la forme intérieure ;
- l'utilisation d'un moyen de déformation pour déformer l'une de la forme intérieure (6) et de la forme périphérique (10) en flexion convexe vers le côté opposé au trait de découpe (2), la déformation différentielle entre la forme intérieure (6) et la forme périphérique (10) étant suffisante pour rompre la forme intérieure (6) le long du trait de découpe (2),
ledit procédé étant **caractérisé en ce que** la déformation différentielle entre la forme intérieure (6) et la forme périphérique (10) est en outre suffisante pour créer la distance nécessaire à l'extraction sans contact de la forme intérieure (6) par rapport à la forme périphérique (10), l'extraction étant réalisée avec un maintien en flexion convexe.

2. Procédé selon la revendication 1, utilisant un moyen de maintien contrant l'effet du moyen de déformation dans l'autre de la forme intérieure (6) et de la forme périphérique (10).

3. Procédé selon la revendication 1 ou 2, dans lequel le moyen d'appui (14, 16) s'étend sur tout le contour externe de la forme intérieure (6), à l'intérieur, en regard ou à l'extérieur par rapport au trait de découpe.

4. Procédé selon l'une quelconque des revendications précédentes, dans lequel le moyen d'appui comprend deux organes d'appui (14, 16), de préférence l'un autour de l'autre.

5. Procédé selon l'une quelconque des revendications précédentes, dans lequel le moyen d'appui (14, 16) comprend au moins un joint pour former au moins une zone de faible pression en regard de l'une au moins de la forme intérieure (6) et de la forme extérieure (10).

6. Procédé selon la revendication précédente, dans lequel une zone de faible pression est une zone de déformation en flexion convexe de ladite une de la forme intérieure (6) et de la forme périphérique (10), le moyen de déformation étant un moyen d'aspiration.

7. Procédé selon la revendication 4 ou 5, prise ensemble avec la revendication 2, dans lequel une zone de faible pression est une zone de maintien contrant la déformation de ladite autre de la forme intérieure (6) et de la forme périphérique (10), le moyen de maintien étant un moyen d'aspiration.

8. Procédé selon l'une quelconque des revendications précédentes, dans lequel le moyen d'appui (14, 16) est adapté pour servir d'appui à ladite autre de la forme intérieure (6) et de la forme périphérique (10) pendant le rompage de la forme intérieure.

9. Procédé selon l'une quelconque des revendications précédentes, dans lequel le moyen de déformation comprend une contre-forme convexe (18) adaptée pour presser ladite une de la forme intérieure (6) et de la forme périphérique (10) en flexion convexe.

10. Machine de rompage d'une forme intérieure (6) dans une feuille de verre (4) destinée à former un vitrage, comprenant:
- un outil de découpe (8) et des moyens de déplacement automatique dudit outil pour réaliser un trait de découpe (2) délimitant le contour externe de ladite forme intérieure (6) et le contour interne d'une forme périphérique (10) ;
- un moyen d'appui (14, 16) pour appuyer sur la feuille de verre (4) le long du contour externe de la forme intérieure (6) ; et
- un moyen de déformation pour déformer l'une de la forme intérieure (6) et de la forme périphérique (10) en flexion convexe vers le côté opposé au trait de découpe (2),
ladite machine étant **caractérisée en ce que** le moyen de déformation et/ou un autre moyen de maintien en flexion convexe est/sont adapté(s) pour réaliser l'extraction de la forme intérieure (6) par rapport à la forme périphérique (10) avec un maintien en flexion convexe de ladite une de la forme intérieure (6) et de la forme périphérique (10).

## Patentansprüche

1. Verfahren zum Brechen einer inneren Form (6) aus einer Glasscheibe (4), die bestimmt ist, eine Verglasung zu bilden, Folgendes umfassend:
- einen Anzeichnungsschritt eines Schneidstrichs (2) auf der Oberfläche des Glases mittels eines Schneidwerkzeugs (8), der die äußere Kontur der inneren Form (6) und die innere Kontur einer Umfangsform (10) begrenzt;
- ein Versetzen in Kontakt der Umfangsform (10) der Glasscheibe (4) mit einem Stützmittel (14, 16) entlang der äußeren Kontur der inneren Form;
- das Verwenden eines Verformungsmittels, um eine der inneren Form (6) und der Umfangsform (10) in konvexer Biegung in Richtung der Seite entgegengesetzt zum Schneidstrich (2) zu verformen, wobei die differentielle Verformung zwischen der inneren Form (6) und der Umfangsform (10) ausreichend sein muss, um die innere Form (6) entlang des Schneidstrichs (2) zu brechen,
wobei das genannte Verfahren **dadurch gekennzeichnet ist, dass** die differentielle Verformung zwischen der inneren Form (6) und der Umfangsform (10) ferner ausreichend ist, um den für die kontaktlose Entnahme der inneren Form (6) in Bezug auf die Umfangsform (10) notwendigen Abstand zu schaffen, wobei die Entnahme mit einem Halten in konvexer Biegung durchgeführt wird.

2. Verfahren nach Anspruch 1, welches ein Haltemittel verwendet, das die Wirkung des Verformungsmittels in der anderen der inneren Form (6) oder der Umfangsform (10) ausgleicht.

3. Verfahren nach Anspruch 1 oder 2, wobei sich das Stützmittel (14, 16) über die gesamte äußere Kontur der inneren Form (6) innerhalb, gegenüber oder außerhalb in Bezug auf den Schneidstrich erstreckt.

4. Verfahren nach einem der vorangehenden Ansprüche, wobei das Stützmittel zwei Stützorgane (14, 16), vorzugsweise das eine um das andere herum, umfasst.

5. Verfahren nach einem der vorangehenden Ansprüche, wobei das Stützmittel (14, 16) mindestens eine Dichtung umfasst, um mindestens einen Bereich geringen Drucks in Bezug auf mindestens eine der inneren Form (6) und der äußeren Form (10) zu bilden.

6. Verfahren nach vorangehendem Anspruch, wobei ein Bereich geringen Drucks ein Verformungsbereich konvexer Biegung von einer der inneren Form (6) und der Umfangsform (10) ist, wobei das Verformungsmittel ein Ansaugmittel ist.

7. Verfahren nach Anspruch 4 oder 5, gemeinsam herangezogen mit Anspruch 2, wobei ein Bereich geringen Drucks ein Haltebereich ist, welcher die Verformung der anderen der inneren Form (6) und der Umfangsform (10) ausgleicht, wobei das Haltemittel ein Ansaugmittel ist.

8. Verfahren nach einem der vorangehenden Ansprüche, wobei das Stützmittel (14, 16) ausgebildet ist, um als Stütze für die andere der inneren Form (6) und der Umfangsform (10) während des Brechens der inneren Form zu dienen.

9. Verfahren nach einem der vorangehenden Ansprüche, wobei das Verformungsmittel eine konvexe Gegenform (18) umfasst, die geeignet ist, um die eine der inneren Form (6) und der Umfangsform (10) in konvexe Biegung zu pressen.

10. Maschine zum Brechen einer inneren Form (6) aus einer Glasscheibe (4), die bestimmt ist, eine Verglasung zu bilden, Folgendes umfassend:
- ein Schneidwerkzeug (8) und Mittel zur automatischen Verlagerung des Werkzeugs, um einen Schneidstrich (2) herzustellen, der die äußere Kontur der inneren Form (6) und die innere Kontur einer Umfangsform (10) begrenzt;
- ein Stützmittel (14, 16) zur Abstützung auf der Glasscheibe (4) entlang der äußeren Kontur der inneren Form (6); und
- ein Verformungsmittel, um eine der inneren Form (6) und der Umfangsform (10) in konvexer Biegung in Richtung der Seite entgegengesetzt zum Schneidstrich (2) zu verformen; wobei die Maschine **dadurch gekennzeichnet ist, dass** das Verformungsmittel und/oder ein anderes Haltemittel in konvexer Biegung ausgebildet ist/sind, um die Entnahme der inneren Form (6) in Bezug auf die Umfangsform (10) mit einem Halten der einen der inneren Form (6) und der Umfangsform (10) in konvexer Biegung durchzuführen.

## Claims

1. A process for breaking out an inner shape (6) in a glass sheet (4) intended to form a glazing, comprising:
- a step of scoring a cutting line (2) in the surface of the glass using a cutting tool (8), which cutting line (2) delimits the outer contour of said inner shape (6) and the inner contour of a peripheral shape (10);
- bringing the peripheral shape (10) of the glass sheet (4) into contact with a bearing means (14, 16) along the outer contour of the inner shape;
- the use of a deformation means for deforming one of the inner shape (6) and of the peripheral shape (10) by convex bending toward the side opposite the cutting line (2), the differential deformation between the inner shape (6) and the peripheral shape (10) being sufficient to break out the inner shape (6) along the cutting line (2), said process being **characterized in that** the differential deformation between the inner shape (6) and the peripheral shape (10) is further sufficient to create the distance needed for the contactless extraction of the inner shape (6) relative to the peripheral shape (10), the extraction being carried out while maintaining the convex bending.

2. The process as claimed in claim 1, using a holding means that counters the effect of the deformation means in the other of the inner shape (6) and of the peripheral shape (10).

3. The process as claimed in claim 1 or 2, wherein the bearing means (14, 16) extends over the entire outer contour of the inner shape (6), inside, opposite or outside relative to the cutting line.

4. The process as claimed in any one of the preceding claims, wherein the bearing means comprises two bearing members (14, 16), preferably one around the other.

5. The process as claimed in any one of the preceding claims, wherein the bearing means (14, 16) comprises at least one seal for forming at least one low-pressure zone opposite at least one of the inner shape (6) and of the outer shape (10).

6. The process as claimed in the preceding claim, wherein a low-pressure zone is a zone of convex bending deformation of said one of the inner shape (6) and of the peripheral shape (10), the deformation means being a suction means.

7. The process as claimed in claim 4 or 5, taken together with claim 2, wherein a low-pressure zone is a holding zone that counters the deformation of said other of the inner shape (6) and of the peripheral shape (10), the holding means being a suction means.

8. The process as claimed in any one of the preceding claims, wherein the bearing means (14, 16) is suitable for being used for bearing against said other of the inner shape (6) and of the peripheral shape (10) during the breaking-out of the inner shape.

9. The process as claimed in any one of the preceding claims, wherein the deformation means comprises a convex counter-form (18) suitable for pressing said one of the inner shape (6) and of the peripheral shape (10) in convex bending.

10. A machine for breaking out an inner shape (6) in a glass sheet (4) intended to form a glazing, comprising:
- a cutting tool (8) and means for the automatic displacement of said tool in order to produce a cutting line (2) that delimits the outer contour of said inner shape (6) and the inner contour of a peripheral shape (10) ;
- a bearing means (14, 16) for bearing against the glass sheet (4) along the outer contour of the inner shape (6); and
- a deformation means for deforming one of the inner shape (6) and of the peripheral shape (10) by convex bending toward the side opposite the cutting line (2), said machine being **characterized in that** the deformation means and/or another means for maintaining the convex bending is/are adapted for carrying out the extraction of the inner shape (6) relative to the peripheral shape (10) while maintaining the convex bending of said one of the inner shape (6) and of the peripheral shape (10).
